# EUROPEAN PATENT APPLICATION

(11) **EP 3 749 043 A1**
(43) Date of publication of application: **09.12.2020**
(21) Application number: 19747017.2
(22) Date of filing: 02.02.2019
(51) Int. Cl.: H04W 74/02, H04L 12/823

(54) **METHOD AND APPARATUS FOR DETECTING LINK PACKET LOSS, STORAGE MEDIUM, AND PROCESSOR**

(30) Priority: 02.02.2018 CN 201810114751
(71) Applicant: ZTE Corporation, Shenzhen, Guangdong 518057 (CN)
(72) Inventor: SHEN, Ruoyu, Shenzhen, Guangdong 518057 (CN); ZHUANG, Lijun, Shenzhen, Guangdong 518057 (CN); FU, Jiangwei, Shenzhen, Guangdong 518057 (CN)
(74) Representative: Aipex B.V.
(86) International application number: PCT/CN2019/074633
(87) International publication number: WO 2019/149287

(57) **Abstract**

Provided are a method and apparatus for detecting packet loss of a link, a storage medium and a processor. The method includes receiving a packet encapsulated with a global sequence number and a sub-link sequence number, where the sub-link sequence number is used for identifying a sub-link that sends the packet; in the case where the received global sequence number is greater than a global sequence number to be received currently, storing the packet in a preset sub-link sequence number chain list according to the sub-link sequence number; and determining packet loss situation of a link that sends the packet according to the packet stored in the preset sub-link sequence number chain list.

## Description

This application claims priority to Chinese Patent Application No. 201810114751.4 filed with the Patent Office of the People's Republic of China on Feb. 02, 2018, disclosure of which is incorporated herein by reference in its entirety.

### TECHNICAL FIELD

The present application relates to the field of communications and, for example, to a method and apparatus for detecting packet loss of a link, a storage medium and a processor.

### BACKGROUND

In the field related to data communications, two links for sending packets have different latencies, so data sent via the two links to an opposite end has different latencies, causing disorder of the packets. In this case, after receiving the packets, the opposite end firstly performs order preservation and then forwards the packets. Therefore, in response to the two links sharing the load, a sending packet is encapsulated with a global sequence number, and the opposite end performs order preservation on the sequence number. If an intermediate link has packet loss, the order preserving end cannot determine whether a packet is actually lostor late due to a large latency, and needs to keep waiting. The only way is to preset a larger timeout threshold value. Only after the waiting time exceeds the threshold value, it is regarded as packet loss, and the order-preserved packets are triggered to be sent. This prolongs cache time of these sequential packets to be sent and increases an overall latency of the two links, thereby affecting an overall binding bandwidth. That is, the problems that the method for detecting packet loss of a link is relatively single and the link latency is increased exist in related art.

No effective solution is proposed for the preceding problems in the related art.

### SUMMARY

The embodiments of the present application provide a method and apparatus for detecting packet loss of a link, a storage medium and a processor to overcome the defects in the related art that the method for detecting packet loss of a link is relatively single and the link latency is increased.

An embodiment of the present application provides a method for detecting packet loss of a link. The method includes receiving a packet encapsulated with a global sequence number and a sub-link sequence number, where the sub-link sequence number is used for identifying a sub-link that sends the packet; in the case where the received global sequence number is greater than a global sequence number to be received currently, storing the packet in a preset sub-link sequence number chain list according to the sub-link sequence number; and determining, according to the packet stored in the preset sub-link sequence number chain list, packet loss situation of a link that sends the packet.

Another embodiment of the present application provides an apparatus for detecting packet loss of a link. The apparatus includes a receiving module, a first storing module and a determination module. The receiving module is configured to receive a packet encapsulated with a global sequence number and a sub-link sequence number, where the sub-link sequence number is used for identifying a sub-link that sends the packet. The first storing module is configured tostore the packet in a preset sub-link sequence number chain list according to the sub-link sequence number, in the case where the received global sequence number is greater than a global sequence number to be received currently. The determination module is configured to determine, according to the packet stored in the preset sub-link sequence number chain list, packet loss situation of a link that sends the packet.

Another embodiment of the present application further provides a storage medium. The storage medium includes a stored program, where the program is configured to, when executed, perform any preceding method.

Another embodiment of the present application further provides a processor configured to execute a program, where the program is configured to, when executed, perform any preceding method.

### BRIEF DESCRIPTION OF DRAWINGS

The drawings described herein are used to provide a further understanding of the present application and form a part of the present application. The exemplary embodiments and descriptions thereof in the present application are used to explain the present application and not to limit the present application in any improper way. In the drawings:
FIG. 1 is a block diagram of a hardware structure of a mobile terminal for a method for detecting packet loss of a link according to an embodiment of the present application;
FIG. 2 is a flowchart of a method for detecting packet loss of a link according to an embodiment of the present application;
FIG. 3 is a schematic diagram of a wired-wireless converged access network in this embodiment;
FIG. 4 is a flowchart of order preservation of packet loss in this embodiment;
FIG. 5 is a schematic diagram of order-preserved packets in this embodiment; and
FIG. 6 is a structural block diagram of an apparatus for detecting packet loss of a link according to an embodiment of the present application.

### DETAILED DESCRIPTION

The present application will be described hereinafter in detail with reference to the drawings and in conjunction with embodiments. It is to be noted that if not in collision, the embodiments and features therein in the present application may be combined with each other.

It is to be noted that the terms "first", "second" and the like in the description, claims and drawings of the present application are used to distinguish between similar objects and are not necessarily used to describe a particular order or sequence.

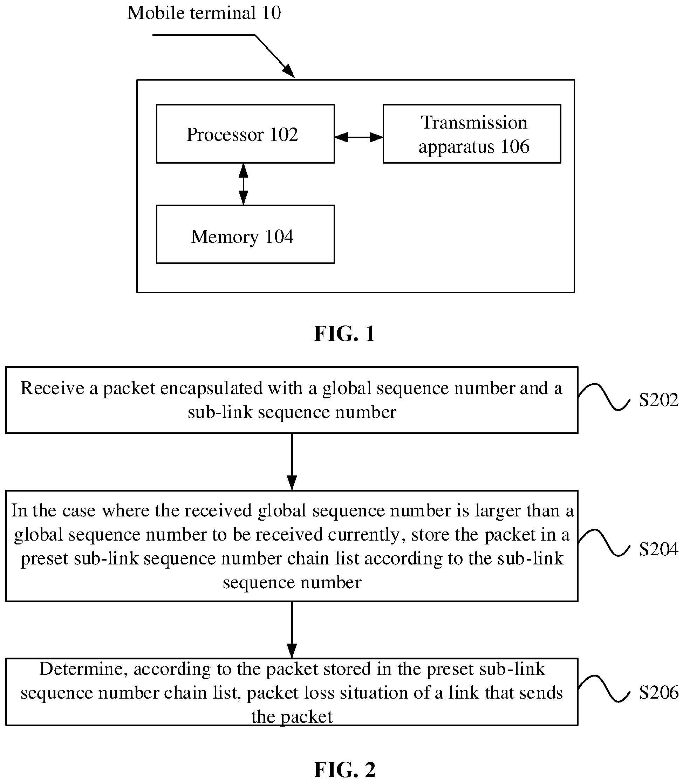

A method embodiment provided by embodiment one of the present application may be executed in a mobile terminal, a computer terminal or other similar computing apparatuses. Using the method embodiment to be executed in the mobile terminal as an example, FIG. 1 is a block diagram of a hardware structure of a mobile terminal for a method for detecting packet loss of a link according to an embodiment of the present application. As shown in FIG. 1, a mobile terminal 10 may include one or more (only one is shown in FIG. 1) processors 102 (where a processor 102 may include, but is not limited to, a microcontroller unit (MCU), a field programmable gate array (FPGA) or other processing apparatuses), a memory 104 for storing data, and a transmission apparatus 106 for implementing a communication function. It is to be understood by those skilled in the art that the structure shown in FIG. 1 is merely illustrative, and not intended to limit the structure of the electronic apparatus described above. For example, the mobile terminal 10 may further include more or fewer components than the components shown in FIG. 1, or may have a configuration different from the configuration shown in FIG. 1.

The memory 104 may be configured to store software programs and modules of application software, for example, program instructions/modules corresponding to the method for detecting packet loss of a link in this embodiment of the present application. The processor 102 executes the software programs and modules stored in the memory 104, so as to perform various function applications and data processing, that is, to perform the preceding method. The memory 104 may include a high-speed random access memory, or may further include a nonvolatile memory, such as one or more magnetic storage apparatuses, flash memories or other nonvolatile solid-state memories. In some instances, the memory 104 may further include memories that are remotely disposed relative to the processor 102. These remote memories may be connected to the mobile terminal 10 via a network. Instances of the preceding network include, but are not limited to, the Internet, an intranet, a local area network, a mobile communication network and a combination thereof.

The transmission apparatus 106 is configured to receive or send data via a network. A specific instance of the preceding network may include a wireless network provided by a communication provider of the mobile terminal 10. In an instance, the transmission apparatus 106 includes a network interface controller (NIC). The NIC may be connected to other network equipment via a base station and thus communicate with the Internet. In an instance, the transmission apparatus 106 may be a radio frequency (RF) module. The RF module is configured to communicate with the Internet in a wireless way.

This embodiment provides a method for detecting packet loss of a link. FIG. 2 is a flowchart of a method for detecting packet loss of a link according to an embodiment of the present application. As shown in FIG. 2, the method includes steps S202, S204 and S206.

In step S202, a packet encapsulated with a global sequence number and a sub-link sequence number is received.

The sub-link sequence number is used for identifying a sub-link that sends the packet.

In step S204, in the case where the received global sequence number is larger than a global sequence number to be received currently, the packet is stored in a preset sub-link sequence number chain list according to the sub-link sequence number.

In step S206, packet loss situation of a link that sends the packet is determined according to the packet stored in the preset sub-link sequence number chain list.

Through the preceding steps, the packet encapsulated with the global sequence number and the sub-link sequence number is received by a receiving end, where the sub-link sequence number is used for identifying the sub-link that sends the packet; in the case where the received global sequence number is larger than the global sequence number to be received currently, the packet is stored in the preset sub-link sequence number chain list according to the sub-link sequence number; and the packet loss situation of the link that sends the packet is determined according to the packet stored in the preset sub-link sequence number chain list. That is, compared with the content for detection of packet loss of a link in the related art, this method can solve problems in the related art that the method for detecting packet loss situation of a link is relatively single and the link latency is increased, thereby achieving the effect of fast detecting packet loss situation of a link.

In an embodiment, the preceding steps may be, but are not necessarily, executed by the receiving end.

In an embodiment, after the step of receiving the packet encapsulated with the global sequence number and the sub-link sequence number, the method further includes storing the packet in a preset global sequence number chain list according to the global sequence number. In this embodiment, the preset global sequence number chain list described above is configured at the receiving end. Packets are sent on different links.

In an embodiment, after the step of storing the packet in the preset global sequence number chain list according to the global sequence number, the method further includes: in the case where the global sequence number is equal to the global sequence number to be received currently, sending the packet in the global sequence number chain list, and updating the global sequence number to be received currently. In this embodiment, the step of updating the global sequence number to be received currently refers to adding 1 to the global sequence number to be received currently.

In an embodiment, after the step of receiving the packet encapsulated with the global sequence number and the sub-link sequence number, the method further includes: in the case where the global sequence number is larger than the global sequence number to be received currently, storing the packet in a preset time chain list according to time when the packet is received. In this embodiment, the case where the global sequence number is larger than the global sequence number to be received currently means that the packet arrives in advance.

In an embodiment, after the step of storing the packet in the preset time chain list according to the time when the packet is received, the method further includes: in response to the time when the time chain list receives the packet exceeding a first preset time, discarding or sending the packet stored in the preset global sequence number chain list. In this embodiment, sending the packet except a lost packet can reduce the latency for waiting for the lost packet.

In an embodiment, the step of determining, according to the packet stored in the preset sub-link sequence number chain list, the packet loss situation of the packet includes: in the case where the preset sub-link sequence number chain list does not receive a packet, where a sequential sub-link sequence number is located, within a second preset time, determining that the link has packet loss. In this embodiment, setting the second preset time can reduce the waiting time.

In an embodiment, after the step of determining, according to the packet stored in the preset sub-link sequence number chain list, the packet loss situation of the link that sends the packet, the method further includes sending the packet stored in the preset global sequence number chain list.

In an embodiment, after the step of storing the packet in the preset global sequence number chain list according to the global sequence number, the method further includes: in the case where the global sequence number is smaller than the global sequence number to be received currently, discarding or sending the packet stored in the preset global sequence number chain list. In this embodiment, the case where the global sequence number is smaller than the global sequence number to be received currently means that the packet arrives late, that is, there is packet loss.

The present application is described in detail hereinafter in conjunction with a specific embodiment.

In the field of related data communications, in the case where there are two links (link A and link B), but one link is not laid in place or the laying quality is not good enough, if a user use only link A or link B, there are problems such as an insufficient traffic bandwidth and an unstable link. Therefore, a solution of bundling link A and link B together can avoid the preceding problems. That is, if user traffic is smaller than a transmission bandwidth threshold of link A, the traffic is sent through only link A; and if the user traffic is larger than the transmission bandwidth threshold of link A, the excess traffic is shared to link B.

Since the latency difference between the two links is not fixed, it is not easy to determine whether the current packet has been lost indeed, so the timeout threshold is generally larger. If the link has packet loss, the packet loss is sensed and the sending of subsequent packets is triggered only when the timeout is up, resulting in a large number of ordered packets being cached for a relatively long time before being sent. However, out-of-order time of single-link packets is relatively fixed. Through sequence number detection of a sub-link, it can be quickly determined whether the single-link has packet loss. In the case of packet loss of a link, the packet loss can be fast detected and the sending of subsequent packets is triggered.

In this embodiment, during the shunting at a sending end, a packet is encapsulated with two sequence numbers: a global sequence number and a sub-link sequence number. A receiving end has 4 cache queues: a global sequence number sorting queue (corresponding to the global sequence number chain list described above), a link A sorting queue and a link B sorting queue (corresponding to sub-link sequence number chain lists described above), and a time queue (corresponding to the time chain list described above). The sending of packets is triggered in the following cases: 1. sequential global sequence numbers trigger the sending of packets; 2. if a link header of the link A or link B does not receive sequential packets within a fixed time, it is regarded that the link has packet loss and the global sequence number sorting queue is triggered to be sent; and 3. the timeout of the time chain list triggers the sending of packets in the global sequence number sorting queue.

In this embodiment, in the case where a single link has packet loss, the packet loss can be fast detected and subsequent packets are sent. It is not necessary to wait for an aging time of order preservation before sending the subsequent packets. Especially in a TCP scenario, the link latency of the packet is reduced, thereby improving an overall bandwidth.

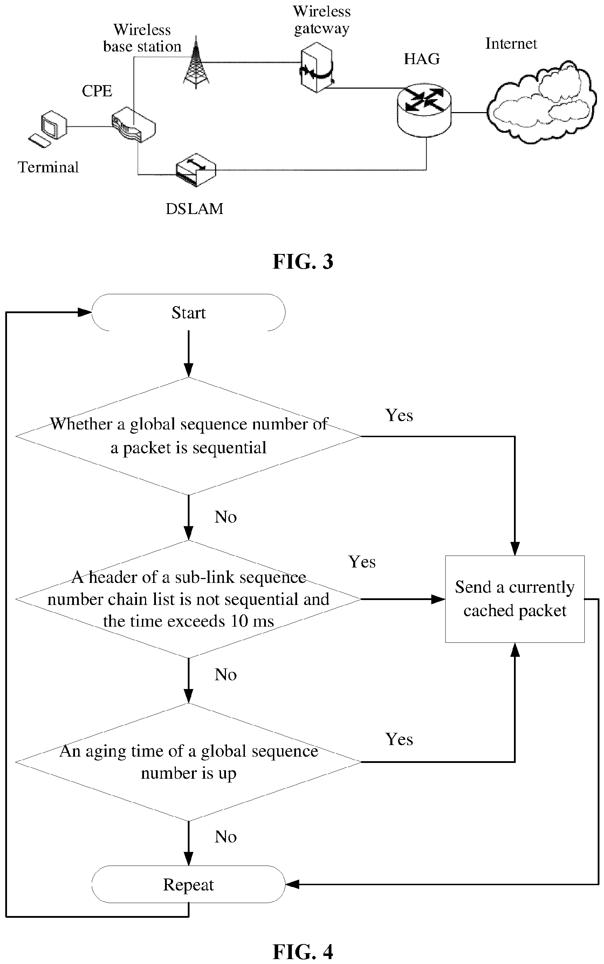

A scenario where a wired link and a wireless link are bundled into a tunnel for wired-wireless convergence is used as an example. FIG. 3 is a schematic diagram of a wired-wireless converged access network in this embodiment. As shown in FIG. 3, two ends of the tunnel are a customer premises equipment (CPE) and a hybrid access gateway (HAG) respectively. The CPE has two interfaces, where one is a traditional wired interface, and the other is a wireless air interface. The HAG device receives and sends traffic to the wired link and the wireless link. Due to different latencies of the two links, the packets are out of order, the CPE device and the HAG device firstly preserve the order of the packets received by the two links and then forward the packets.

A description is given below using an example where the CPE sends traffic to the HAG and the HAG performs order preservation. Traffic sent by the HAG to the CPE may be processed similarly. For ease of explanation of this solution, sequence number inversion is not considered in the order preservation algorithm described below. The time chain list has timeout of 200 ms, and the sub-link sequence number has timeout of 10 ms. For example, there may be the cases described below.

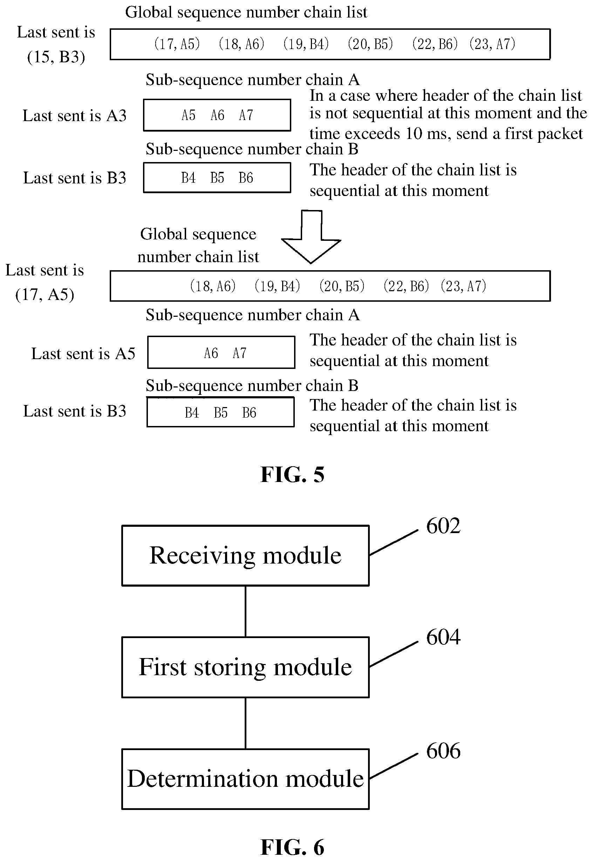

FIG. 4 is a flowchart of order preservation of packet loss in this embodiment. FIG. 5 is a schematic diagram of order-preserved packets in this embodiment. As shown in FIGS. 4 and 5, there are cases 1 to 5 described below.
Case 1: The HAG receives a packet that is sent by the CPE and encapsulated with a global sequence number and a sub-link sequence number, and determines whether the global sequence number of the packet (corresponding to the packet sequence number in FIG. 4) is identical to a global sequence number which is waited for. If the global sequence number of the packet is identical to the global sequence number which is waited for, it is indicated that the packet is a packet with a sequential sequence number, the HAG directly sends the packet and updates the sequence number which is waited for, and the processing goes to case 2. If the global sequence number of the received packet is larger than the sequence number which is waited for, it is regarded that the packet arrives in advance and requires caching and sequence preservation, and the processing goes to case 3. If the global sequence number of the received packet is smaller than the sequence number which is waited for, it is regarded that the time when the packet arrives has timed out, and the packet may be discarded or directly sent according to scenarios.
Case 2: If a node sequence number at a header of the global sequence number chain list is the sequence number which is waited for, the sequence number which is waited for is updated to the current sequence number plus 1, and a packet of the current chain list node is sent and removed from the global sequence number chain list, the sub-link sequence number chain list and the time chain list. The processing of case 2 is repeated until the node sequence number in the header of the global sequence number chain list is not equal to the sequence number which is waited for currently.
Case 3: The packet is inserted into 3 chain lists: the global sequence number chain list, the sub-link sequence number chain list (link A or link B) and the time chain list. The packets are inserted into the global sequence number chain list according to global sequence numbers from smallest to largest. The packets are inserted into the sub-link sequence number chain list according to sub-link sequence numbers (corresponding to the sub-sequence number headers described above) from smallest to largest. The packets are inserted into the time chain list in sequence according to the order in which the packets arrive.
Case 4: If it is detected that the header of the sub-link sequence number chain list is not sequential and the duration of the header being not sequential exceeds 10 ms, it is regarded that the link has packet loss, and the global sequence number chain list is triggered to send a packet.
Case 5: If it is detected that a packet of a header node of the time chain list exceeds timeout time (200 ms), then the global sequence number chain list is triggered to send packets from the minimum sequence number until the sequence number which is detected at the moment exceeding timeout time.

From the description of the embodiment described above, it will be apparent to those skilled in the art that the method in the embodiment described above may be implemented by software plus a necessary general-purpose hardware platform, or may of course be implemented by hardware. However, in many cases, the former is a preferred implementation manner. Based on such understanding, the solutions of the present application substantially, or the part contributing to the related art, may be embodied in the form of a software product. The computer software product is stored on a storage medium (such as a read-only memory (ROM)/random access memory (RAM), a magnetic disk or an optical disk) and includes several instructions for enabling a terminal device (which may be a mobile phone, a computer, a server or a network device) to perform the methods according to various embodiments of the present application.

An embodiment of the present application further provides an apparatus for detecting packet loss of a link. The apparatus is configured to perform the embodiments and preferred implementation manners described above. What has been described is not repeated. As used below, the term "module" may be at least one of software, hardware or a combination thereof capable of implementing predetermined functions. The apparatus in the embodiment described below is preferably implemented by software, but implementation by hardware or by a combination of software and hardware is also possible and conceivable.

FIG. 6 is a block diagram of an apparatus for detecting packet loss of a link according to an embodiment of the present application. As shown in FIG. 6, the apparatus includes a receiving module 602, a first storing module 604 and a determination module 606.

The receiving module 602 is configured to receive a packet encapsulated with a global sequence number and a sub-link sequence number. The sub-link sequence number is used for identifying a sub-link that sends the packet.

The first storing module 604 is connected to the receiving module 602, and configured to store the packet in a preset sub-link sequence number chain list according to the sub-link sequence number in the case where the global sequence number is larger than a global sequence number to be received currently.

The determination module 606 is connected to the first storing module 604, and configured to determine, according to the packet stored in the preset sub-link sequence number chain list, packet loss situation of a link that sends the packet.

In an embodiment, the apparatus further includes a second storing module. The second storing module is configured to store the packet in a preset global sequence number chain list according to the global sequence number the after the step of receiving the packet encapsulated with the global sequence number and the sub-link sequence number.

In an embodiment, the apparatus further includes a first processing module. The first processing module is configured to, after the step of storing the packet in the preset global sequence number chain list according to the global sequence number, in the case where the global sequence number is equal to the global sequence number to be received currently, send the packet in the global sequence number chain list and update the global sequence number to be received currently.

In an embodiment, the apparatus further includes a third storing module. The third storing module is configured to store the packet in the preset global sequence number chain list according to the global sequence number after the step of receiving the packet encapsulated with the global sequence number and the sub-link sequence number.

In an embodiment, the apparatus further includes a second processing module. The second processing module is configured to, after the step of storing the packet in the preset global sequence number chain list according to the global sequence number, in the case where the global sequence number is equal to the global sequence number to be received currently, send the packet in the global sequence number chain list and update the global sequence number to be received currently.

In an embodiment, the apparatus is further configured to, after the step of receiving the packet encapsulated with the global sequence number and the sub-link sequence number, in the case where the global sequence number is greater than the global sequence number to be received currently, store the packet in a preset time chain list according to the time when the packet is received.

In an embodiment, the apparatus is further configured to, after the step of storing the packet in the preset time chain list according to the time when the packet is received, in response to the time when the time chain list receives the packet exceeding a first preset time, discard or send the packet stored in the preset global sequence number chain list.

In an embodiment, the determination module 606 determines, according to the packet stored in the preset sub-link sequence number chain list, the packet loss situation of the packet through the following manner: the determination module 606 determines that the sub-link has packet loss in the case where the preset sub-link sequence number chain list does not receive a packet, where a sequential sub-link sequence number is located, within a second preset time.

In an embodiment, the apparatus is configured to, after the step of determining, according to the packet stored in the preset sub-link sequence number chain list, the packet loss situation of the link that sends the packet, send the packet stored in the preset global sequence number chain list.

In an embodiment, the apparatus in further configured to, after the step of storing the packet in the preset global sequence number chain list according to the global sequence number, in the case where the global sequence number is smaller than the global sequence number to be received currently, discard or send the packet stored in the preset global sequence number chain list.

It is to be noted that the preceding modules may be implemented by software or hardware. Implementation by hardware may, but may not necessarily, be performed in the following manner: the preceding modules are located in a same processor or the preceding modules are located in any combination in different processors.

An embodiment of the present application further provides a storage medium. The storage medium includes a stored program. When the program is executed to perform any preceding method.

In an embodiment, the storage medium may be configured to store program codes for performing the steps described above.

In an embodiment, the storage medium may include, but is not limited to, a USB flash disk, a read-only memory (ROM), a random access memory (RAM), a mobile hard disk, a magnetic disk, an optical disk or another medium capable of storing program codes.

An embodiment of the present application further provides a processor. The processor is configured to execute a program. When the program is executed to perform any preceding method.

In an embodiment, for specific examples in this embodiment, reference may be made to the examples described in the embodiments and optional implementation manners described above, and no repetition is be made in this embodiment.

Apparently, it should be understood by those skilled in the art that each of the modules or steps of the present application described above may be implemented by a general-purpose computing apparatus, the modules or steps may be concentrated on a single computing apparatus or distributed on a network composed of multiple computing apparatuses, and optionally, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present application is not limited to any particular combination of hardware and software.

## Claims

1. A method for detecting packet loss of a link, comprising:
receiving a packet encapsulated with a global sequence number and a sub-link sequence number, wherein the sub-link sequence number is used for identifying a sub-link that sends the packet;
in a case where the received global sequence number is larger than a global sequence number to be received currently, storing the packet in a preset sub-link sequence number chain list according to the sub-link sequence number; and
determining, according to the packet stored in the preset sub-link sequence number chain list, packet loss situation of the link that sends the packet.

2. The method of claim 1, wherein after receiving the packet encapsulated with the global sequence number and the sub-link sequence number, the method further comprises:
storing the packet in a preset global sequence number chain list according to the global sequence number.

3. The method of claim 2, wherein after storing the packet in the preset global sequence number chain list according to the global sequence number, the method further comprises:
in a case where the global sequence number is equal to the global sequence number to be received currently, sending the packet in the global sequence number chain list, and updating the global sequence number to be received currently.

4. The method of claim 2, wherein after receiving the packet encapsulated with the global sequence number and the sub-link sequence number, the method further comprises:
in the case where the global sequence number is larger than the global sequence number to be received currently, storing the packet in a preset time chain list according to time when the packet is received.

5. The method of claim 4, wherein after storing the packet in the preset time chain list according to the time when the packet is received, the method further comprises:
in response to the time when the time chain list receives the packet exceeding a first preset time, discarding or sending the packet stored in the preset global sequence number chain list.

6. The method of claim 2, wherein determining, according to the packet stored in the preset sub-link sequence number chain list, the packet loss situation of the packet comprises:
in a case where the preset sub-link sequence number chain list does not receive a packet, where a sequential sub-link sequence number is located, within a second preset time, determining that the sub-link has packet loss.

7. The method of claim 6, wherein after determining, according to the packet stored in the preset sub-link sequence number chain list, the packet loss situation of the link that sends the packet, the method further comprises:
sending the packet stored in the preset global sequence number chain list.

8. The method of claim 2, wherein after storing the packet in the preset global sequence number chain list according to the global sequence number, the method further comprises:
in a case where the global sequence number is smaller than the global sequence number to be received currently, discarding or sending the packet stored in the preset global sequence number chain list.

9. An apparatus for detecting packet loss of a link, comprising:
a receiving module, configured to receive a packet encapsulated with a global sequence number and a sub-link sequence number, wherein the sub-link sequence number is used for identifying a sub-link that sends the packet;
a first storing module, configured to store the packet in a preset sub-link sequence number chain list according to the sub-link sequence number in a case where the global sequence number is larger than a global sequence number to be received currently; and
a determination module, configured to determine, according to the packet stored in the preset sub-link sequence number chain list, packet loss situation of a link that sends the packet.

10. The apparatus of claim 9, further comprising:
a second storing module, configured to store the packet in a preset global sequence number chain list according to the global sequence number.

11. The apparatus of claim 10, further comprising:
a first processing module, configured to, in a case where the global sequence number is equal to the global sequence number to be received currently, send the packet in the global sequence number chain list, and update the global sequence number to be received currently.

12. The apparatus of claim 10, further comprising:
a third storing module, configured to, in the case where the global sequence number is larger than the global sequence number to be received currently, store the packet in a preset time chain list according to time when the packet is received.

13. The apparatus of claim 12, further comprising:
a second processing module, configured to, in response to the time when the time chain list receives the packet exceeding a first preset time, discard or send the packet stored in the preset global sequence number chain list.

14. A storage medium, including a stored program, wherein the program is configured to, when executed, perform the method of any one of claims 1 to 8.

15. A processor, configured to execute a program, wherein the program is configured to, when executed on the processor, perform the method of any one of claims 1 to 8.
